# EUROPÄISCHE PATENTSCHRIFT

(11) **EP 2 087 580 B1**
(45) Veröffentlichungstag und Bekanntmachung des Hinweises auf die Patenterteilung: **12.08.2015**
(21) Anmeldenummer: 07817684.9
(22) Anmeldetag: 17.10.2007
(51) Int. Cl.: H02M 1/12

(54) **ENERGIEVERSORGUNGSEINRICHTUNG FÜR EINEN ELEKTRISCHEN SCHALTKREIS**
ENERGY SUPPLY DEVICE FOR AN ELECTRICAL CIRCUIT
DISPOSITIF D'ALIMENTATION EN ÉNERGIE POUR CIRCUIT DE COMMUTATION ÉLECTRIQUE

(30) Priorität: 03.11.2006 DE 102006051845
(43) Veröffentlichungstag der Anmeldung: 12.08.2009
(73) Patentinhaber: Conti Temic Microelectronic GmbH, 90411 Nürnberg (DE)
(72) Erfinder: SCHUBERT, Göran, 91126 Schwabach (DE)
(74) Vertreter: Bonn, Roman Klemens
(86) Internationale Anmeldenummer: PCT/DE2007/001849
(87) Internationale Veröffentlichungsnummer: WO 2008/052509

(56) Entgegenhaltungen:
- EP-A- 1 253 694
- JP-A- 1 293 005
- JP-A- 8 098 539
- JP-A- 8 126 201
- JP-A- H02 174 313
- SU-A1- 607 314
- US-A- 4 939 486
- US-A1- 2001 033 212
- US-B1- 6 208 537

## Beschreibung

Die Erfindung betrifft eine Energieversorgungseinrichtung für einen elektrischen Schaltkreis.

Energieversorgungseinrichtungen für elektrische Schaltkreise sind meist als geregelte Spannungsquellen ausgeführt. Da diese Spannungsquellen ihre Funktion nur bis zu einigen 100 kHz erfüllen, ist es bekannt, Kondensatoren an einem Ausgang der geregelten Spannungsquelle parallel zu schalten. Mittels der Kondensatoren wird die Bandbreite von geregelten Spannungsquellen erweitert.

Durch diese Bandbreitenerweiterung können sich Resonanzkreise hoher Güte ausbilden, die eine erhöhte Abstrahlung von elektromagnetischer Energie zur Folge haben. Weiterhin führt die Bandbreitenerweiterung speziell bei schnell taktenden integrierten Schaltkreisen, wie beispielsweise Speicherbausteinen oder Mikroprozessoren, im Bereich der Taktfrequenz sowie deren zugehörigen Harmonischen zu Common-Mode-Spannungen in der Masseleitung und damit auch ohne Resonanzeffekte zu einer erhöhten Abstrahlung von elektromagnetischer Energie.

US 6,208,537 B1_ beschreibt einen Filter für eine Drehstrommaschine, die aus einer PWM-getriebenen Brückenschaltung angesteuert wird, und dessen Serienresonanz des Querzweigs auf die Grundwelle der PWM-Frequenz abgestimmt ist.

Der Erfindung liegt daher die Aufgabe zugrunde, eine Energieversorgungseinrichtung für einen elektrischen Schaltkreis derart weiterzubilden, dass der elektrische Schaltkreis abstrahlungsarm und zuverlässig mit Energie versorgbar ist.

Diese Aufgabe ist erfindungsgemäß gelöst durch eine Energieversorgungseinrichtung mit den im Anspruch 1 angegebenen Merkmalen. Erfindungsgemäß wurde erkannt, dass durch das Zusammenwirken der Energiequelle und des mindestens einen elektrischen Filters eine Energieversorgung des elektrischen Schaltkreises derart möglich ist, dass dieser im wesentlichen ausschließlich in einem funktional erforderlichen Frequenzbereich mit Energie versorgt wird. In dem ersten Frequenzbereich, der dem funktional erforderlichen Frequenzbereich des elektrischen Schaltkreises entspricht, weist die Energieversorgungseinrichtung an dem Filterausgang im wesentlichen eine Spannungsquellencharakteristik auf. Dies bedeutet, dass die an dem Filterausgang anliegende Spannung in dem ersten Frequenzbereich im wesentlich unabhängig von der Last ist. In dem relativ zu dem ersten Frequenzbereich höherfrequenten zweiten Frequenzbereich weist die Energieversorgungseinrichtung an dem Filterausgang eine Stromquellencharakteristik auf. Dies bedeutet, dass der Filterausgang in dem zweiten Frequenzbereich hochimpedant ist, so dass sich über die Energieversorgungseinrichtung im wesentlichen keine hochfrequenten Stromkreise ausbilden können. Der elektrische Schaltkreis wird somit im funktional erforderlichen ersten Frequenzbereich zuverlässig mit Energie versorgt. Gleichzeitig ist die Abstrahlung von elektromagnetischer Energie gering, da im ersten Frequenzbereich aufgrund der geringen Frequenzen und im zweiten Frequenzbereich aufgrund der geringen hochfrequenten Ströme und Spannungen im wesentlichen keine Abstrahlung erfolgt. Die Abstrahlung von elektromagnetischer Energie wird somit im Vergleich zu den bekannten Energieversorgungseinrichtungen, die aufgrund der Bandbreitenerweiterung ein Spannungsquellenverhalten weit über den funktional erforderlichen Bereich hinaus aufweisen, deutlich reduziert.

Die Energieversorgungseinrichtung nach Anspruch 1 gewährleistet in der Praxis eine zuverlässige Energieversorgung bei gleichzeitig ausreichend geringem Abstrahlverhalten.

Eine Energiequelle nach Anspruch 2 ermöglicht eine einfache Realisierung der Spannungsquellencharakteristik in dem ersten Frequenzbereich.

Eine Ausbildung des mindestens einen elektrischen Filters nach Anspruch 3 ist einfach und kostengünstig.

Eine Ausbildung des mindestens einen elektrischen Filters nach Anspruch 1 ermöglicht in einfacher Weise eine Entkopplung der Energiequelle von dem zu versorgenden elektrischen Schaltkreis im zweiten Frequenzbereich.

Ein Entkopplungselement nach Anspruch 1 weist bei höheren Frequenzen zusätzlich zu dem induktiven Verhalten ein ohmsches Verhalten auf. Durch das zunehmend ohmsche Verhalten bei höheren Frequenzen sinkt mit zunehmender Frequenz die Güte von das Entkopplungselement enthaltenden Schwingkreisen.

Eine Ausbildung des mindestens einen elektrischen Filters nach Anspruch 4 ermöglicht eine Erweiterung des ersten Frequenzbereichs. Die Resonanzfrequenz und die Güte des Serienschwingkreises sind so ausgelegt, dass dieser im oberen ersten Frequenzbereich als Spannungsquelle wirkt. Insbesondere bei einer Ausbildung der Energiequelle als Spannungsquelle ergänzt und erweitert der Serienschwingkreis den funktionalen Frequenzbereich der Spannungsquelle.

Ein induktiv wirkendes Bauteil nach Anspruch 5 bewirkt, dass der Serienschingkreis bei höheren Frequenzen, insbesondere im zweiten Frequenzbereich, ein zusätzliches ohmsches Verhalten aufweist, so dass die Güte des Serienschwingkreises drastisch reduziert wird. Durch das Ferritmaterial weist das Bauteil zusätzlich ein ohmsches Verhalten auf.

Eine Ausbildung der Energieversorgungseinrichtung nach Anspruch 6 ermöglicht eine noch zuverlässigere Energieversorgung bei gleichzeitig geringerer Abstrahlung.

Eine elektrische Schaltung nach Anspruch 7 ermöglicht, dass die Vorteile der erfindungsgemäßen Energieversorgungseinrichtung bei Betrieb mit einem elektrischen Schaltkreis zum Tragen kommen.

Zusätzliche Merkmale und Einzelheiten der Erfindung ergeben sich aus der Beschreibung mehrerer Ausführungsbeispiele anhand der Zeichnung. Es zeigen:
- Fig. 1: ein Ersatzschaltbild einer elektrischen Schaltung mit einer Energieversorgungseinrichtung gemäß einem ersten Ausführungsbeispiel der Erfindung,
- Fig. 2: ein Diagramm des Amplitudengangs einer Spannungsübertragungsfunktion der Energieversorgungseinrichtung gemäß Fig. 1,
- Fig. 3: ein Ersatzschaltbild einer elektrischen Schaltung mit einer Energieversorgungseinrichtung gemäß einem zweiten Ausführungsbeispiel der Erfindung, und
- Fig. 4: ein Ersatzschaltbild einer elektrischen Schaltung mit einer Energieversorgungseinrichtung gemäß einem dritten Ausführungsbeispiel der Erfindung.

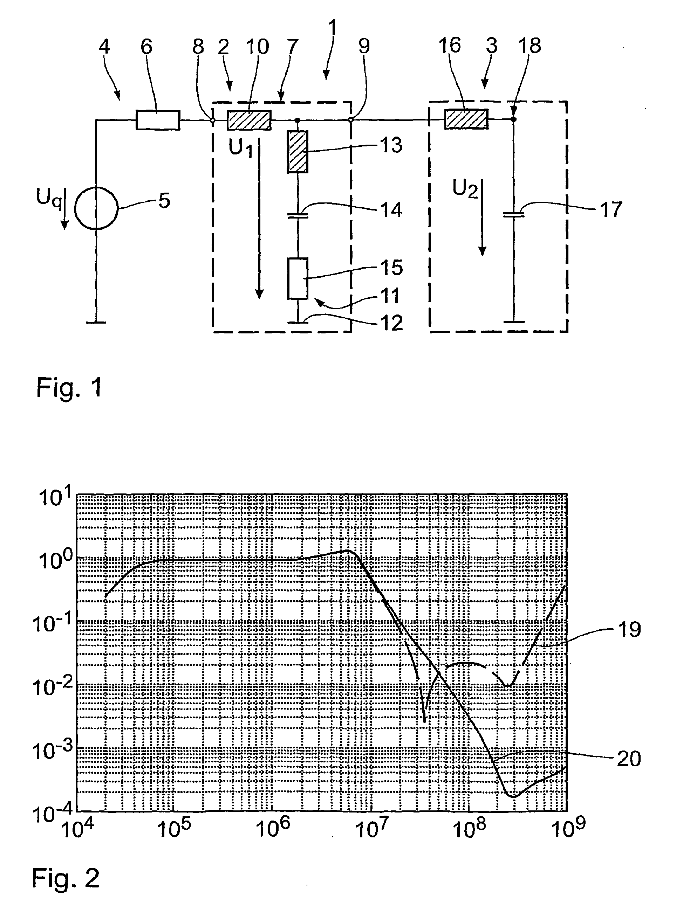

Nachfolgend wird unter Bezugnahme auf die Figuren 1 bis 3 ein erstes Ausführungsbeispiel der Erfindung beschrieben. Eine elektrische Schaltung 1 weist eine Energieversorgungseinrichtung 2 und einen elektrischen Schaltkreis 3 auf. Der elektrische Schaltkreis 3 ist zur Energieversorgung mit der Energieversorgungseinrichtung 2 verbunden.

Die Energieversorgungseinrichtung 2 weist zur Bereitstellung von elektrischer Energie eine Energiequelle 4 auf, die als geregelte Spannungsquelle ausgebildet ist. Die Energiequelle 4 wird nachfolgend als Spannungsquelle bezeichnet. Die Spannungsquelle 4 ist in dem Ersatzschaltbild gemäß Fig. 1 als Reihenschaltung einer idealen Spannungsquelle 5 und eines komplexen Innenwiderstandes 6 dargestellt. Der komplexe Innenwiderstand 6 weist einen Impedanzwert Zᵢ auf. Die ideale Spannungsquelle 5 erzeugt eine lastunabhängige Quellenspannung U_{q}.

Zur Versorgung des elektrischen Schaltkreises 3 weist die Energieversorgungseinrichtung 2 weiterhin ein elektrisches Filter 7 auf. Das elektrische Filter 7 ist an einem Filtereingang 8 mit der Spannungsquelle 4 verbunden. An einem Filterausgang 9 ist das elektrische Filter 7 mit dem elektrischen Schaltkreis 3 verbunden, so dass das elektrische Filter 7 zwischen der Spannungsquelle 4 und dem elektrischen Schaltkreis 3 angeordnet ist. An dem Filterausgang 9 liegt eine Spannung U₁ an. Die Spannung U₁ stellt die Versorgungsspannung des elektrischen Schaltkreises 3 dar.

Das elektrische Filter 7 ist passiv ausgebildet. Dies bedeutet, dass das elektrische Filter 7 ausschließlich aus passiven Bauelementen gebildet ist. Das elektrische Filter 7 weist ein induktiv wirkendes Entkopplungselement 10 auf, das zwischen den Filtereingang 8 und den Filterausgang 9 geschaltet ist. Das induktiv wirkende Entkopplungselement 10 ist als Spule aus Ferritmaterial ausgebildet. Alternativ kann das Entkopplungselement 10 als Ferritbead ausgebildet sein. Das induktiv wirkende Entkopplungselement 10 dient zur Entkopplung der Spannungsquelle 4 von dem zu versorgenden elektrischen Schaltkreis 3 und weist einen Induktivitätswert L₁ auf.

Weiterhin umfasst das elektrische Filter 7 einen Serienschwingkreis 11. Der Serienschwingkreis 11 ist zwischen den Filterausgang 9 und eine Schaltungsmasse 12 geschaltet. Der Serienschwingkreis 11 ist somit parallel zu dem elektrischen Schaltkreis 3 ausgangsseitig des elektrischen Filters 7 angeordnet. Der Serienschwingkreis 11 weist induktiv wirkendes Bauelement 13 und einen Kondensator 14 auf, die in Reihe geschaltet sind. Das induktiv wirkende Bauelement 13 weist einen Induktivitätswert L₂ auf. Weiterhin weist der Kondensator 14 einen Kapazitätswert C₂ auf. Das induktiv wirkende Bauelement 13 ist als Spule ausgebildet und besteht aus einem Ferritmaterial. Ferner weist der Serienschwingkreis 11 einen in Reihe zu dem induktiv wirkenden Bauelement 13 und dem Kondensator 14 geschalteten ohmschen Widerstand 15 auf. Der ohmsche Widerstand 15 weist einen Widerstandswert R₂ auf. Weiterhin kann das induktiv wirkende Bauelement 13 als Ferritbead ausgebildet sein.

Der elektrische Schaltkreis 3 ist als getakteter integrierter Schaltkreis ausgebildet und weist eine Taktfrequenz f₁ auf. Der integrierte Schaltkreis wird allgemein üblich als IC (Integrated Circuit) bezeichnet. Im Ersatzschaltbild gemäß Fig. 1 ist ein Energieversorgungsbus des integrierten Schaltkreises dargestellt, wobei dieser im Ersatzschaltbild als Reihenschaltung einer Businduktivität 16 und einer Buskapazität 17 modelliert ist. Die Businduktivität 16 weist einen Induktivitätswert L₃ und die Buskapazität 17 einen Kapazitätswert C₃ auf. Zwischen der Businduktivität 16 und der Buskapazität 17 ist ein Knoten 18 ausgebildet, wobei an dem Knoten 18 eine Spannung U₂ anliegt.

Die Spannungsquelle 4 und das elektrische Filter 7 sind derart ausgebildet, dass die Energieversorgungseinrichtung 2 an dem Filterausgang 9 in einem ersten Frequenzbereich ΔF₁ eine Spannungsquellencharakteristik und in einem relativ zu dem ersten Frequenzbereich ΔF₁ höherfrequenten zweiten Frequenzbereich ΔF₂ eine Stromquellencharakteristik aufweist. Spannungsquellencharakteristik bedeutet, dass die Versorgungsspannung U₁ in dem ersten Frequenzbereich ΔF₁ im wesentlichen lastunabhängig ist Stromquellencharakteristik bedeutet, dass die Energieversorgungseinrichtung 2 am Filterausgang 9 in dem zweiten Frequenzbereich ΔF₂ hochimpedant ist. Vorzugsweise sind die Spannungsquelle 4 und das elektrische Filter 7 derart ausgebildet, dass der erste Frequenzbereich ΔF₁ zumindest bis zu 1/10, insbesondere 1/5, und insbesondere 2/5 der Taktfrequenz f₁ des zu versorgenden elektrischen Schaltkreises 3 reicht und der zweite Frequenzbereich ΔF₂ zumindest ab der Taktfrequenz f₁ beginnt.

Eine erste Kurve 19 in Fig. 2 zeigt den Amplitudengang einer Spannungsübertragungsfunktion U₁/U_{q}, wobei entlang der Abszisse eine Frequenz f in Hz und entlang der Ordinate das Spannungsamplitudenverhältnis U₁/U_{q} aufgetragen ist. Eine zweite Kurve 20 zeigt entsprechend den Amplitudengang einer Spannungsübertragungsfunktion U₂/U_{q}.

Wie der ersten Kurve 19 in Fig. 2 zu entnehmen ist, reicht der erste Frequenzbereich ΔF₁ bis ca. 7 MHz. Dies bedeutet, dass die Energieversorgungseinrichtung 2 bis zu 7 MHz eine Spannungsquellencharakteristik aufweist. In einem unteren ersten Frequenzbereich bis ca. 100 kHz bewirkt die geregelte Spannungsquelle 4 die Spannungsquellencharakteristik. Mit zunehmender Frequenz steigt der Einfluss des Entkopplungselementes 10 und entkoppelt die Spannungsquelle 4 zunehmend von dem elektrischen Schaltkreis 3. In einem oberen ersten Frequenzbereich von ca. 100 kHz bis 7 MHz wird die Spannungsquellencharakteristik im wesentlichen von dem Verhalten des Serienschwingkreises 11 bewirkt. Ab dem Ende des ersten Frequenzbereiches ΔF₁ bei ca. 7 MHz setzt die Dämpfung des Entkopplungselements 10 und des induktiv wirkenden Bauelements 13 ein, wobei die Dämpfung durch das Ferritmaterial bewirkt wird, das bei höheren Frequenzen zu einem zusätzlichen ohmschen Verhalten des Entkopplungselements 10 und des induktiv wirkenden Bauelements 13 führt. Somit weist die Energieversorgungseinrichtung 2 in dem zweiten Frequenzbereich ΔF₂ ab ca. 20 MHz bis 1 GHz eine Stromquellencharakteristik auf. Die Energieversorgungseinrichtung 2 stellt somit einerseits eine zuverlässige Energieversorgung des elektrischen Schaltkreises 3 sicher und gewährleistet andererseits eine geringe Abstrahlung von elektromagnetischer Energie.

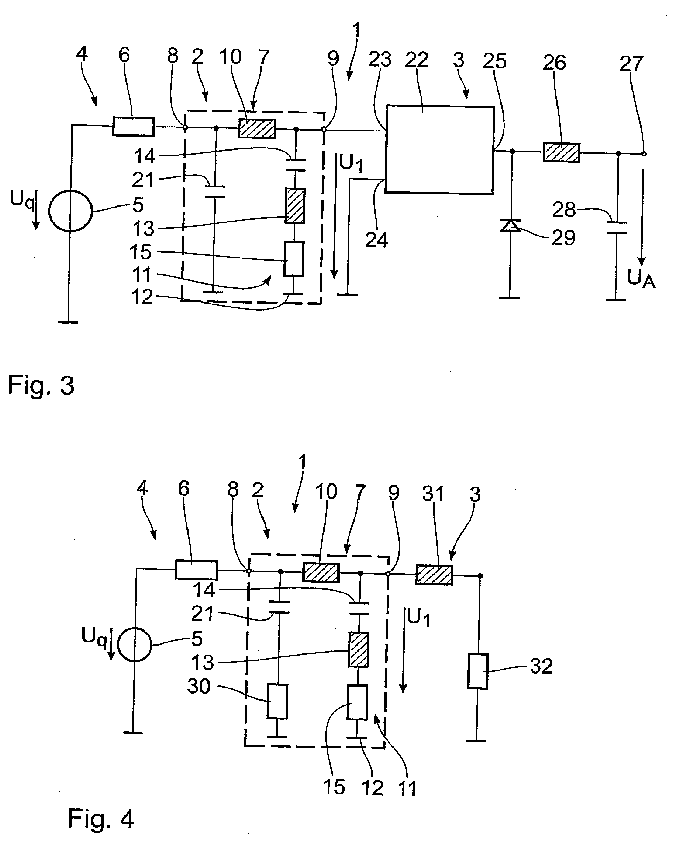

Nachfolgend wird unter Bezugnahme auf Fig. 3 ein zweites Ausführungsbeispiel der Erfindung beschrieben. Das elektrische Filter 7 umfasst zusätzlich zu dem Entkopplungselement 10 und dem Serienschwingkreis 11 einen Glättungskondensator 21, der zwischen dem Filtereingang 8 und der Schaltungsmasse 12 geschaltet ist und somit parallel zur Spannungsquelle 4 angeordnet ist. Der Glättungskondensator 21 weist einen Kapazitätswert C₁ auf. Der Glättungskondensator 21 dient zur Stabilisierung der an dem Filtereingang 8 anliegenden Spannung. Der elektrische Schaltkreis 3 umfasst einen Schaltregler 22, der beispielsweise als Tiefsetzsteller oder Hochsetzsteller ausgebildet ist. Ein erster Eingang 23 des Schaltreglers 22 ist mit dem Filterausgang 9 verbunden. Ein zweiter Ausgang 24 des Schaltreglers 22 ist mit der Schaltungsmasse 12 verbunden. Der Schaltregler 22 weist ferner einen Ausgang 25 auf, der über eine Speicherdrossel 26 mit einem Schaltungsausgang 27 verbunden ist. Am Schaltungsausgang 27 liegt die Ausgangsspannung U_{A} an. Der elektrische Schaltkreis 3 weist ausgangsseitig einen weiteren Glättungskondensator 28 auf, der mit dem Schaltungsausgang 27 und der Schaltungsmasse 12 verbunden ist. Die Speicherdrossel 26 besitzt einen Induktivitätswert L_{A} und der Glättungskondensator 28 einen Kapazitätswert C_{A}. Der Induktivitätswert L_{A} beträgt beispielsweise 68 µH und der Kapazitätswert C_{A} 100 µF. Am Ausgang 25 des Schaltreglers 22 ist eine Freilaufdiode 29 angeordnet, die zwischen den Ausgang 25 und die Schaltungsmasse 12 geschaltet ist. Die Freilaufdiode 29 weist eine Durchflusskapazität auf, die ein kapazitives Verhalten der Freilaufdiode 29 bewirkt. Die Durchflusskapazität liegt im Bereich von ungefähr 1 nF. Die Durchflusskapazität und eine nicht dargestellte Leitungsinduktivität bilden einen Parallelschwingkreis aus, der sich über den Glättungskondensator 21 schließt. Die Resonanzfrequenz dieses Parallelschwingkreises würde ohne das Entkopplungselement 10 und den Serienschwingkreis 11 bei ca. 100 MHz liegen.

Mittels des induktiv wirkenden Entkopplungselements 10 und des induktiv wirkenden Bauelements 13 wird die Resonanzfrequenz in den funktionalen Frequenzbereich des Schaltreglers 22 geschoben, so dass der Schaltregler 22 aktiv die Güte des Parallelschwingkreises soweit reduziert, dass der Parallelschwingkreis nicht mehr existiert. Das induktiv wirkende Entkopplungselement 10 entkoppelt den Schaltregler 22 von der Spannungsquelle 4 und bildet mit dem Serienschwingkreis 11 ein Eingangsfilter für eine am Schaltungsausgang 27 angeschlossene Last. Die Resonanzfrequenz und die Güte des Serienschwingkreises 11 ist so ausgelegt, dass dieser für den funktionalen Bereich des Schaltreglers 22, der im wesentlichen dem oberen ersten Frequenzbereich entspricht, eine Spannungsquellencharakteristik aufweist. Dadurch, dass das induktiv wirkende Entkopplungselement 10 und das induktiv wirkende Bauelement 13 aus einem Ferritmaterial bestehen, wird eine zusätzliche Dämpfung und breitbandige Reduktion der Güte durch die Verluste im Ferritmaterial erzielt, so dass die Energieversorgungseinrichtung 2 im zweiten Frequenzbereich ΔF₂ eine Stromquellencharakteristik aufweist. Der Parallelschwingkreis ist durch den Schaltregler 22 und das Ferritmaterial so weit gedämpft, dass die elektrische Schaltung 1 nicht mehr schwingungsfähig ist. Die Funktionsweise der Energieversorgungseinrichtung 2 entspricht ansonsten der im ersten Ausführungsbeispiel beschriebenen Funktionsweise.

Nachfolgend wird unter Bezugnahme auf Fig. 4 ein drittes Ausführungsbeispiel der Erfindung beschrieben. Das elektrische Filter 7 weist zusätzlich zu dem Glättungskondensator 21 einen in Reihe dazu geschalteten ohmschen Widerstand 30 auf. Der ohmsche Widerstand 30 besitzt einen Widerstandswert R₁. Der elektrische Schaltkreis 3 ist in dem Ersatzschaltbild gemäß Fig. 4 als Reihenschaltung einer Leitungsinduktivität 31 und einer komplexen Schaltkreislast 32 dargestellt. Die Leitungsinduktivität 31 besitzt einen Induktivitätswert L_{L} und die komplexe Schaltkreislast 32 einen Impedanzwert Z_{L}. Der ohmsche Widerstand 30 dient zur Begrenzung von Resonanzströmen zwischen dem Glättungskondensator 21 und der komplexen Schaltkreislast 32, die über das Entkopplungselement 10 und die Leitungsinduktivität 31 fließen. Der komplexe Innenwiderstand 6 der Spannungsquelle 4 begrenzt den Frequenzbereich der Spannungsquelle 4. Mittels der Resonanz des Serienschwingkreis 11 wird der funktionale Frequenzbereich der Spannungsquelle 4 erweitert und gezielt an die Lasterfordernisse angepasst, so dass die Energieversorgungseinrichtung 2 in dem ersten Frequenzbereich ΔF₁, der im wesentlichen einem funktionalen Frequenzbereich des elektrischen Schaltkreises 3 entspricht, eine Spannungsquellencharakteristik aufweist. Mit steigender Frequenz entkoppelt das induktiv wirkende Entkopplungselement 10 die Spannungsquelle 4 und den Glättungskondensator 21 zunehmend von dem elektrischen Schaltkreis 3. Zusätzlich weisen das Entkopplungselement 10 und das induktiv wirkende Bauelement 13, die aus einem Ferritmaterial bestehen, mit steigender Frequenz ein zunehmend ohmsches Verhalten auf. Die Energieversorgungseinrichtung 2 ist somit in dem zweiten Frequenzbereich ΔF₂ am Filterausgang 9 hochimpedant, so dass eine Stromquellencharakteristik ausgebildet ist. Durch die hohen Verluste in dem Ferritmaterial können sich keine hochfrequenten Resonanzen bilden. Im ersten Frequenzbereich ΔF₁ lässt sich die Güte der in der elektrischen Schaltung 1 ausgebildeten Parallelschwingkreise über die ohmschen Widerstände 15, 30 einstellen.

Dadurch, dass die Energieversorgungseinrichtung 2 in dem ersten Frequenzbereich ΔF₁, der im wesentlichen dem funktionalen Frequenzbereich des zu versorgenden elektrischen Schaltkreises 3 entspricht, eine Spannungsquellencharakteristik aufweist und in einem zweiten Frequenzbereich ΔF₂ eine Stromquellencharakteristik aufweist, wird der elektrische Schaltkreis 3 ausschließlich in dem funktional erforderlichen Frequenzbereich zuverlässig mit Energie versorgt. In dem ersten Frequenzbereich sind die Frequenzen noch derart gering, dass keine nennenswerte Abstrahlung von elektromagnetischer Energie erfolgt. In dem höherfrequenten zweiten Frequenzbereich ΔF₂ ist die Energieversorgungseinrichtung 2 hochimpedant, so dass über die Schaltungsmasse 12 nur geringe hochfrequente Ströme fließen können und keine nennenswerte hochfrequente Spannung abfällt. Die Abstrahlung von elektromagnetischer Energie ist somit ebenfalls gering. In weiteren Ausführungsbeispielen können die in den vorangegangenen Ausführungsbeispielen beschriebenen elektrischen Filter 7 kaskadenartig hintereinander geschaltet werden. Durch eine kaskadenartige Hintereinanderschaltung der elektrischen Filter 7 wird eine verbesserte Spannungsquellen- und Stromquellencharakteristik erzielt.

## Patentansprüche

1. Energieversorgungseinrichtung für einen elektrischen Schaltkreis,
a. mit einer Energiequelle (4) zur Bereitstellung von elektrischer Energie, und
b. mit mindestens einem elektrischen Filter (7) zur Versorgung des elektrischen Schaltkreises (3) mit elektrischer Energie, wobei
c. die Energiequelle (4) und das mindestens eine elektrische Filter (7) derart zusammenwirken, dass die Energieversorgungseinrichtung (2) an einem Filterausgang (9)
i. in einem ersten Frequenzbereich (ΔF₁) eine Spannungsquellencharakteristik aufweist, und
ii. in einem relativ zu dem ersten Frequenzbereich (ΔF₁) höherfrequenten zweiten Frequenzbereich (ΔF₂) eine Stromquellencharakteristik aufweist,
**dadurch gekennzeichnet dass,**
d. die Energiequelle (4) und das mindestens eine elektrische Filter (7) derart ausgebildet sind, dass der erste Frequenzbereich (ΔF₁) zumindest bis zu einem Zehntel einer Taktfrequenz (f₁) des zu versorgenden elektrischen Schaltkreises (3) reicht und der zweite Frequenzbereich (ΔF₂) zumindest ab der Taktfrequenz (f₁) beginnt, und dass
e. das mindestens eine elektrische Filter (7) ein induktiv wirkendes Entkopplungselement (10) zur Entkopplung der Energiequelle (4) von dem zu versorgenden elektrischen Schaltkreis (3) aufweist, wobei das induktiv wirkende Entkopplungselement (10) aus einem Ferritmaterial besteht.

2. Energieversorgungseinrichtung nach Anspruch 1, **dadurch gekennzeichnet, dass** die Energiequelle (4) als Spannungsquelle ausgebildet ist.

3. Energieversorgungseinrichtung nach einem der Ansprüche 1 oder 2 , **dadurch gekennzeichnet, dass** das mindestens eine elektrische Filter (7) passiv ausgebildet ist.

4. Energieversorgungseinrichtung nach einem der Ansprüche 1 bis 3, **dadurch gekennzeichnet, dass** das mindestens eine elektrische Filter (7) einen Serienschwingkreis (11) aufweist, der parallel zu der Energiequelle (4) ausgangsseitig des mindestens einen elektrischen Filters (7) angeordnet ist.

5. Energieversorgungseinrichtung nach Anspruch 4 , **dadurch gekennzeichnet, dass** der Serienschwingkreis (11) ein induktiv wirkendes Bauelement (13) aufweist, wobei das induktiv wirkende Bauelement (13) aus einem Ferritmaterial besteht.

6. Energieversorgungseinrichtung nach einem der Ansprüche 1 bis 5, **dadurch gekennzeichnet, dass** mehrere elektrische Filter (7) kaskadenartig hintereinander geschaltet sind.

7. Elektrische Schaltung, mit
a. einer Energieversorgungseinrichtung (2) nach einem der Ansprüche 1 bis 6, und
b. einem mit Energie zu versorgenden und eine Taktfrequenz (f₁) aufweisenden elektrischen Schaltkreis (3).

## Claims

1. Energy supply device for an electrical circuit,
a. comprising an energy source (4) for providing electrical energy, and
b. comprising at least one electrical filter (7) for supplying electrical energy to the electrical circuit (3), wherein
c. the energy source (4) and the at least one electrical filter (7) interact in such a way that the energy supply device (2) has, at a filter output (9)
i. a voltage source characteristic in a first frequency range (ΔF₁), and
ii. a current source characteristic in a second frequency range (ΔF₂) which has a higher frequency relative to the first frequency range (ΔF₁),
**characterized in that**
d. the energy source (4) and the at least one electrical filter (7) are designed in such a way that the first frequency range (ΔF₁) reaches at least up to a tenth of a clock frequency (f₁) of the electrical circuit (3) to be supplied, and the second frequency range (ΔF₂) begins at least after the clock frequency (f₁), and **in that**
e. the at least one electrical filter (7) has a inductively acting decoupling element (10) for decoupling the energy source (4) from the electrical circuit (3) to be supplied, wherein the inductively acting decoupling element (10) consists of a ferrite material.

2. Energy supply device according to Claim 1, **characterized in that** the energy source (4) is in the form of a voltage source.

3. Energy supply device according to either of Claims 1 and 2, **characterized in that** the at least one electrical filter (7) is passive.

4. Energy supply device according to one of Claims 1 to 3, **characterized in that** the at least one electrical filter (7) has a series resonant circuit (11), which is arranged in parallel with the energy source (4) on the output side of the at least one electrical filter (7).

5. Energy supply device according to Claim 4, **characterized in that** the series resonant circuit (11) has an inductively acting component (13), wherein the inductively acting component (13) consists of a ferrite material.

6. Energy supply device according to one of Claims 1 to 5, **characterized in that** a plurality of electrical filters (7) are connected in series in the form of a cascade.

7. Electrical circuit, comprising
a. an energy supply device (2) according to one of Claims 1 to 6 and
b. an electrical circuit (3) to which energy is to be supplied and which has a clock frequency (f₁).

## Revendications

1. Dispositif d'alimentation en énergie pour un circuit électrique,
a. comportant une source d'énergie (4) pour la fourniture de l'énergie électrique, et
b. comportant au moins un filtre (7) électrique pour alimenter le circuit électrique (3) en énergie électrique,
c. la source d'énergie (4) et ledit au moins un filtre (7) électrique coopérant de telle sorte que le dispositif d'alimentation en énergie (2) comporte au niveau d'une sortie de filtre (9)
i. une caractéristique de source de tension dans une première plage de fréquences (ΔF₁), et
ii. une caractéristique de source de courant dans une deuxième plage de fréquences (ΔF₂) présentant des fréquences plus élevées que dans la première plage de fréquences (ΔF₁),
**caractérisé en ce que**
d. la source d'énergie (4) et ledit au moins un filtre (7) électrique sont configurés de telle sorte que la première plage de fréquences (ΔF₁) s'étend au moins jusqu'à un dixième d'une fréquence élémentaire (f₁) du circuit électrique (3) à alimenter et que la deuxième plage de fréquences (ΔF₂) commence au moins à partir de la fréquence élémentaire (f₁), et **en ce que**
e. ledit au moins un filtre (7) électrique comporte un élément de découplage (10) à action inductive permettant de découpler la source d'énergie (4) du circuit électrique (3) à alimenter, ledit élément de découplage (10) à action inductive étant réalisé dans un matériau ferritique.

2. Dispositif d'alimentation en énergie selon la revendication 1, **caractérisé en ce que** la source d'énergie (4) est réalisée sous la forme d'une source de tension.

3. Dispositif d'alimentation en énergie selon l'une des revendications 1 ou 2, **caractérisé en ce que** ledit au moins un filtre (7) électrique est réalisé sous forme passive.

4. Dispositif d'alimentation en énergie selon l'une quelconque des revendications 1 à 3, **caractérisé en ce que** ledit au moins un filtre (7) électrique comporte un circuit oscillant série (11) qui est disposé parallèlement à la source d'énergie (4) du côté sortie dudit au moins un filtre (7) électrique.

5. Dispositif d'alimentation en énergie selon la revendication 4, **caractérisé en ce que** le circuit oscillant série (11) comporte un composant (13) à action inductive, ledit composant (13) à action inductive étant réalisé dans un matériau ferritique.

6. Dispositif d'alimentation en énergie selon l'une quelconque des revendications 1 à 5, **caractérisé en ce que** plusieurs filtres (7) électriques sont montés en cascade l'un derrière l'autre.

7. Circuit électrique, comportant
a. un dispositif d'alimentation en énergie (2) selon l'une des revendications 1 à 6, et
b. un circuit électrique (3) à alimenter en énergie et comportant une fréquence élémentaire (f₁).
